(19) Europäisches Patentamt
European Patent Office
Office européen des brevets

(11) **EP 3 405 280 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(21) Anmeldenummer: **17701817.3**

(22) Anmeldetag: **17.01.2017**

(51) Int Cl.:
*B01F 15/02* (2006.01)   *B01F 13/10* (2006.01)
*B01F 5/04* (2006.01)   *B01F 5/06* (2006.01)
*B01F 5/02* (2006.01)   *B01F 7/02* (2006.01)
*B01F 15/00* (2006.01)   *B01F 3/04* (2006.01)
*B01F 3/08* (2006.01)   *B60S 3/04* (2006.01)

(86) Internationale Anmeldenummer:
**PCT/EP2017/050902**

(87) Internationale Veröffentlichungsnummer:
**WO 2017/125393 (27.07.2017 Gazette 2017/30)**

(54) **VORRICHTUNG UND VERFAHREN ZUM ERZEUGEN EINER GEBRAUCHSFERTIGEN LÖSUNG AUS EINEM KONZENTRAT**

DEVICE AND METHOD FOR PRODUCING A READY-TO-USE SOLUTION FROM A CONCENTRATE

DISPOSITIF ET PROCÉDÉ DE PRODUCTION D'UNE SOLUTION PRÊTE À L'EMPLOI À PARTIR D'UN CONCENTRÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2016 DE 102016000596**

(43) Veröffentlichungstag der Anmeldung:
**28.11.2018 Patentblatt 2018/48**

(73) Patentinhaber: **WashTec Holding GmbH 86153 Augsburg (DE)**

(72) Erfinder:
• **KÖLBL, Ulrich**
  **86316 Friedberg (DE)**
• **SCHWÄRZER, Michael**
  **86447 Aindling (DE)**
• **OSWALD, Helmut**
  **86316 Friedberg (DE)**
• **KISER, Franz**
  **86510 Ried (DE)**
• **MAYER, Stefan**
  **86356 Neusäss (DE)**

(74) Vertreter: **Reitstötter Kinzebach Patentanwälte Sternwartstrasse 4 81679 München (DE)**

(56) Entgegenhaltungen:
EP-A2- 1 008 380    DE-T2- 69 931 170
FR-A- 1 532 742    US-A- 4 533 123
US-A- 4 648 043    US-A- 4 814 073
US-B1- 6 293 290

EP 3 405 280 B1

**Beschreibung**

Die vorliegende Erfindung betrifft eine Vorrichtung und ein Verfahren zum Erzeugen einer gebrauchsfertigen Lösung aus einem Konzentrat und einem Verdünner, typischerweise Wasser. Eine solche Vorrichtung kann z.B. in einer Fahrzeugwaschanlage eingesetzt werden, um eine Lösung herzustellen, die zum Waschen, Wachsen oder für andere im Rahmen einer Fahrzeugwäsche in Betracht kommende Oberflächenbehandlungen gebraucht werden kann.

Um Verpackungs- und Transportkosten zu sparen, sind Hersteller und Anwender meist an Konzentraten mit einem möglichst niedrigen Lösungsmittelanteil interessiert. Solche Konzentrate neigen dazu, zähflüssig zu sein und sich nur widerwillig wieder mit einem Verdünner zu mischen. Werden sie in einen Strom des Lösungsmittels eingespritzt, dann können Lösungsmittel und Konzentrat zusammen lange Wege zurücklegen, ohne sich homogen zu vermischen. Eine homogene Vermischung ist aber notwendig für die Brauchbarkeit der verdünnten Lösung.

In der US 2004/0065682 A1 ist deshalb eine Vorrichtung zum Erzeugen einer gebrauchsfertigen Lösung beschrieben, bei der Konzentrat und Verdünner in einem offenen Vorratsbehälter zusammengeführt und verquirlt werden. Um die Lösung anschließend auf ein Fahrzeug aufzusprühen, wird eine leistungsstarke Pumpe benötigt, die in der Lage ist, eine große Menge an Lösung in kurzer Zeit gegen den zum Versprühen erforderlichen Druck zu fördern.

In der US 6,293,290 B1, die eine Vorrichtung entsprechend dem Oberbegriff des Anspruchs 1 und ein Verfahren entsprechend dem Oberbegriff des Anspruchs 14 offenbart, wird ein Fahrzeugwaschsystem beschrieben, das eine Wasserzuführung und einen Mischbereich mit verschiedenen Mischmodulen umfasst. Dabei wird das Wasser von einer Wasserversorgung über ein Ventil dem Mischbereich zugeführt. Dort gelangt das Wasser über verschiedene Leitungen zu einer Mischkammer und anschließend zu einer Waschleitung. Vor der Mischkammer wird mittels einer Pumpe eine Chemikalie zudosiert. Das mit der Chemikalie vermischte Wasser gelangt in die Mischkammer. Diese weist einen größeren Querschnitt als stromaufwärts und stromabwärts von der Mischkammer liegende Teile der Leitung auf. Der Strömungsquerschnitt bei der Mischkammer vergrößert sich, um Turbulenzen innerhalb der Mischkammer zu erzeugen.

Die US 4,648,043 beschreibt ein Wasserbehandlungssystem, bei dem Chemikalien einer Wasserleitung zugeführt werden. Hierfür sind Dosiereinheiten vorgesehen, welche gepulste Dosierpumpen aufweisen. Nachdem die Chemikalien der Leitung zudosiert wurden, gelangt das Gemisch in eine Mischvorrichtung, die ein Gehäuse und einen Einlass umfasst. Innerhalb des Gehäuses ist eine Mischkavität angeordnet. Von dem Einlass gelangt das Gemisch über eine Leitung in die Mischkavität. Diese Leitung besitzt Öffnungen, die so angeordnet sind, dass sich Turbulenzen innerhalb der Mischkavität ausbilden. Ein ähnliches Wasserbehandlungssystem ist in der US 4,533,132 beschrieben.

Aufgabe der Erfindung ist es, eine Vorrichtung und ein Verfahren zu schaffen, die mit einfachen und kostengünstigen Mitteln in der Lage sind, eine gebrauchsfertige Lösung unter zum Verteilen der Lösung benötigten Überdruck bereitzustellen.

Erfindungsgemäß wird diese Aufgabe durch eine Vorrichtung mit den Merkmalen des Anspruchs 1 und ein Verfahren mit den Merkmalen des Anspruchs 14 gelöst. Vorteilhafte Ausgestaltungen und Weiterbildungen ergeben sich aus den abhängigen Ansprüchen.

Die Aufgabe wird gelöst durch eine Vorrichtung zum Erzeugen einer gebrauchsfertigen Lösung aus einem Konzentrat und einem Verdünner mit

- einem Einlass für den Verdünner,
- einem Einlass für das Konzentrat,
- einem Auslass für die Lösung, einer Leitung, die sich vom Einlass für den Verdünner über einen Zusammenfluss, an dem Verdünner und Konzentrat aufeinandertreffen, zum Auslass erstreckt,
- einem Mischbehälter, der in der Leitung zwischen dem Zusammenfluss und dem Auslass angeordnet ist und einen größeren Querschnitt als stromauf- und stromabwärts vom Mischbehälter liegende Teile der Leitung aufweist und
- einer Dosierpumpe für das Konzentrat, die saugseitig mit dem Einlass für das Konzentrat und druckseitig mit dem Zusammenfluss verbunden ist, die gepulst arbeitet und ausgebildet ist, mit einer Taktfrequenz zu arbeiten, bei der mehrere Pumpstöße auf die Verweilzeit der Flüssigkeit im Mischbehälter entfallen, wobei der Innenraum des Mischbehälters eine Längserstreckung in Durchflussrichtung und eine Quererstreckung in einer Richtung senkrecht zur Durchflussrichtung aufweist und wobei das Verhältnis der maximalen Längserstreckung des Mischbehälters zur maximalen Quererstreckung des Mischbehälters in einem Bereich zwischen 1 und 4 liegt.

Unter einem Pumpstoß wird insbesondere ein Pumpimpuls oder ein Dosierimpuls verstanden, bei dem ein bestimmtes Konzentratvolumen in einen Volumenstrom des Verdünners eindosiert wird.

Gemäß einer Ausgestaltung der erfindungsgemäßen Vorrichtung ist die Leitung druckdicht ausgebildet.

Die Dosierpumpe muss zwar auch in der Lage sein, gegen einen Überdruck anzufordern, doch ist die zu fördernde Menge erheblich kleiner, als wenn die gesamte Lösung gepumpt werden muss. Deshalb genügt hier eine preiswerte Pumpe mit geringer Förderrate. Der große Querschnitt des Mischbehälters wirkt einem laminaren Strömungsverlauf entgegen und fördert die Durchmischung von Konzentrat und Lösungsmittel, so dass am Auslass eine homogene Lösung erhalten wird.

Da in dem Mischbehälter das Mischen kontinuierlich im Durchfluss stattfindet, solange Konzentrat und Lösungsmittel zugeführt werden, muss der Mischbehälter nicht groß sein; sein Volumen kann ein kleiner Bruchteil der für eine Anwendung an einem Fahrzeug benötigten Menge an gebrauchsfertiger Lösung sein. Wenn der Druck am Einlass für den Verdünner vorgegeben ist, ist der Durchsatz der Leitung im Wesentlichen durch ihre Gestalt bestimmt. Wenn am Einlass ein vom Hersteller für den Betrieb empfohlener Nenndruck herrscht, z.B. 4 bar, wie an den Anschlüssen der öffentlichen Wasserversorgungsnetze üblich, kann dieser Durchsatz pro Minute, d.h. ein pro Minute durch einen Querschnitt durchtretendes Flüssigkeitsvolumen, ein Mehrfaches des Volumens des Mischbehälters betragen, d.h. im Laufe einer Minute wird der Inhalt des Mischbehälters mehrmals ausgetauscht.

Vorzugsweise liegt der Durchsatz der Leitung pro Minute zwischen dem 10- und 20-fachen des Volumens des Mischbehälters. Ein Durchsatz pro Minute von mehr als dem 20-fachen Volumen des Mischbehälters führt zu einer so kurzen Verweilzeit im Mischbehälter, dass die Homogenität der Durchmischung beeinträchtigt werden kann. Wenn der Durchsatz pro Minute kleiner als das 10-fache Volumen ist, dauert entweder die Bereitstellung der zum Behandeln eines Fahrzeugs benötigten Menge an Lösung unerwünscht lang, oder es wird ein voluminöser Mischbehälter benötigt, der die Vorrichtung sperrig und teuer macht.

Der Mischbehälter kann nicht nur räumliche, sondern auch zeitliche Inhomogenitäten in der Zusammensetzung seiner Zuflüsse ausgleichen. Es kann daher eine kostengünstige gepulst arbeitende Pumpe zum Dosieren des Konzentrats verwendet werden, allerdings sollte die Taktfrequenz der Pumpe in einem Bereich von 1 Hz bis 10 Hz liegen oder mehrere 10 Hz betragen.

Gemäß einer Ausgestaltung der erfindungsgemäßen Vorrichtung ist der Einlass für den Verdünner so ausgebildet, dass sich ein definierter Durchsatz D in der Leitung in einem Bereich zwischen dem Einlass für den Verdünner und dem Zusammenfluss ergibt. Ferner ist der Dosierpumpe die Taktfrequenz f zugeordnet. Bei der erfindungsgemäßen Vorrichtung ist das Volumen V des Mischbehälters dann

$$V = \frac{k \cdot D}{f},$$

wobei der Parameter k in einem Bereich zwischen 1 und 15, bevorzugt in einem Bereich von 4 bis 8 liegt.

Bei der erfindungsgemäßen Vorrichtung wird das Konzentrat der Leitung mit dem Verdünner gepulst zudosiert. Aus diesem Grund ist nach dem Zudosieren des Konzentrats die Konzentration des Konzentrats in dem Verdünner nicht homogen. Es ergeben sich Inhomogenitäten über den Querschnitt der Leitung sowie Inhomogenitäten in Fließrichtung, die auch als zeitliche Inhomogenitäten bezeichnet werden. Mit dem Mischbehälter der erfindungsgemäßen Vorrichtung kann vorteilhafterweise eine Homogenisierung in Fließrichtung, das heißt ein zeitliche Homogenisierung erreicht werden. Der Mischbehälter stellt somit auch die Funktion eines Pulsationsdämpfers bereit.

Für die Vermischung von Konzentrat und Verdünner in Fließrichtung ist eine lange Verweilzeit der Flüssigkeitsmischung in dem Mischbehälter wichtig. Bei der erfindungsgemäßen Vorrichtung wird daher das Volumen des Mischbehälters in Abhängigkeit von der Taktfrequenz bestimmt, mit welcher das Konzentrat der Leitung zudosiert wird. Des Weiteren hängt das Volumen des Mischbehälters von dem Durchsatz in der Leitung ab. Das Behältervolumen muss mindestens so groß sein, dass ein Dosierimpuls komplett von dem Mischbehälter aufgenommen werden kann, der in einen bestimmten Volumenstrom des Verdünners eingemischt werden soll. Der vorstehend angegebene Parameter k gibt somit die Anzahl der Pumpstöße an, die in den Volumenstrom des Verdünners eingemischt werden sollen. Der Parameter k sollte daher mindestens 1 sein, bevorzugt liegt er jedoch zwischen 1 und 15, insbesondere in einem Bereich von 4 bis 8. In diesem Fall werden somit mehrere Perioden des eindosierten Konzentrats mit dem Verdünner in den Mischbehälter in Fließrichtung vermischt. Es findet eine Rückvermischung und eine zeitliche Homogenisierung in dem Mischbehälter statt.

Für die zeitliche Homogenisierung der Flüssigkeitsmischung in dem Mischbehälter ist des Weiteren der Formfaktor des Mischbehälters von Bedeutung. Der Behälter darf nicht zu lang gestreckt sein, da er sonst einfach linear durchströmt wird. Für die Geometrie des Mischbehälters ist insbesondere das Verhältnis der Länge zur Dicke des Mischbehälters relevant.

Erfindungsgemäß weist der Innenraum des Mischbehälters eine Längserstreckung in Durchflussrichtung und eine Quererstreckung in einer Richtung senkrecht zur Durchflussrichtung auf, wobei das Verhältnis der maximalen Längserstreckung des Mischbehälters zur maximalen Quererstreckung des Mischbehälters in einem Bereich zwischen 1 und 4 liegt, besonders bevorzugt zwischen 2 und 3. Bei einem kreiszylindrischen Mischbehälter ist die maximale Längserstreckung die Länge im Innenraum des zylindrischen Mischbehälters und die maximale Quererstreckung ist der Innendurchmesser des Mischbehälters.

Des Weiteren ist die Geometrie der Zulauf- und Ablauföffnung relativ zur Geometrie des Mischbehälters von Bedeutung. Die Zulauföffnung wird auch als Eingang des Mischbehälters bezeichnet, die Ablauföffnung auch als Ausgang des Mischbehälters. Durch die Wahl der Geometrie sollte die einströmende Flüssigkeitsmischung zu möglichst starken Verwirbelungen führen. Dies kann dadurch erreicht werden, dass die Flüssigkeitsmischung nicht symmetrisch eingespeist wird.

Gemäß einer Ausgestaltung der erfindungsgemäßen Vorrichtung ist der Mischbehälter zylindrisch und der Mischbehälter weist stromaufwärts in der einen Stirnfläche eine Zulauföffnung und stromabwärts in der anderen Stirnfläche eine Ablauföffnung auf. Die Zulauföffnung und die Ablauföffnung sind in diesem Fall bezüglich einer Achse des zylindrischen Mischbehälters versetzt zueinander angeordnet. Beispielsweise können sie bezüglich der Achse des zylindrischen Mischbehälters auf den jeweiligen Stirnflächen gegenüberliegend angeordnet sein.

Gemäß einer weiteren Ausgestaltung der erfindungsgemäßen Vorrichtung liegt das Verhältnis der Fläche der Zulauföffnung zur mittleren Querschnittsfläche des Mischbehälters in einem Bereich von 1/30 bis 1/200. Durch dieses Flächenverhältnis wird die Geschwindigkeit der in den Mischbehälter einströmenden Flüssigkeitsmischung bestimmt. Ein größeres Verhältnis führt zu einer stärkeren Rückvermischung der einströmenden Flüssigkeitsmischung mit der bereits im Mischbehälter befindlichen Flüssigkeitsmischung, die früher dem Mischbehälter zugeführt wurde.

Um die Durchmischung im Mischbehälter zu effektivieren, kommen diverse Hilfsmittel in Betracht, die einzeln oder in Kombination miteinander verwendet werden können.

Ein erstes solches Hilfsmittel ist ein Rohrstutzen am Eingang des Mischbehälters. Indem dieser in den Mischbehälter vorspringt, begünstigt er die Ablösung des in den Mischbehälter eindringenden Flüssigkeitsstroms von den Wänden des Mischbehälters und damit die Ausbildung von Turbulenz.

Es kann auch eine Düse am Eingang des Mischbehälters vorgesehen sein. Indem die Düse den Strömungsquerschnitt verengt, erzwingt sie eine Geschwindigkeitssteigerung der zuströmenden Flüssigkeit, was deren Verwirbelung im Mischbehälter begünstigt.

Um die Verwirbelung im Mischbehälter zu fördern, kann auch eine Prallfläche an einem Eingang des Mischbehälters vorgesehen sein.

Ein Drallerzeuger in der Leitung zwischen dem Zusammenfluss und dem Mischbehälter kann die Durchmischung von Konzentrat und Lösungsmittel bereits vor dem Eintritt in den Mischbehälter verbessern.

Insbesondere wenn bei hoher Viskosität des Konzentrats die oben genannten, keine beweglichen Komponenten erfordernden Hilfsmittel nicht ausreichen, kann es nötig sein, einen angetriebenen Rührflügel in dem Mischbehälter vorzusehen.

Ein Absperrventil kann zwischen dem Einlass für den Verdünner und dem Zusammenfluss vorgesehen sein, um die Leitung bei Nichtgebrauch der Vorrichtung druckentlasten zu können.

In der Praxis ist der Verdünner meist Wasser, und der Einlass für den Verdünner ist an ein Wasserversorgungsnetz angeschlossen. Dabei kann es sich um ein öffentliches Wasserversorgungsnetz handeln; bei Verwendung der Vorrichtung in einer Fahrzeugwaschanlage kommt aber auch um ein mit wiederaufbereitetem Wasser gespeistes internes Versorgungsnetz der Fahrzeugwaschanlage in Betracht.

Der Konzentrat-Vorratsbehälter sollte auswechselbar an den Einlass für das Konzentrat angeschlossen sein. Insbesondere um den Konzentrat-Vorratsbehälter risikolos austauschen zu können, sollte eine Druckentlastung der Leitung, wie oben erwähnt, möglich sein.

Einer bevorzugten Anwendung zufolge ist dem Mischbehälter ein Schaumerzeuger nachgelagert, um die Lösung vor dem Auftragen auf ein Fahrzeug aufzuschäumen. Speziell hier ist die mit dem Mischbehälter erzielbare räumliche und zeitliche Homogenität der Lösung wichtig, denn wenn der Mischbehälter fehlen würde, würde zwar beim Öffnen der Ventile der Fluss von Wasser sofort einsetzen, bevor jedoch Konzentrat zugemischt werden kann, müsste die Dosierpumpe erst den erforderlichen Druck aufbauen. Dieser zeitliche Versatz hätte zur Folge, dass bei jedem Einschalten zunächst im wesentlichen klares Wasser in den Schaumerzeuger gelangt, das selber nicht aufgeschäumt werden kann und lediglich, wenn es das Fahrzeug benetzt, die Haftung des später austretenden Schaums am Fahrzeug beeinträchtigt. Durch den Mischbehälter kann hingegen sichergestellt werden, dass stets nur Lösung zum Schaumerzeuger gelangt, die genügend Konzentrat enthält, um gut aufschäumbar zu sein und einen festen, gut am Fahrzeug haftenden Schaum zu ergeben.

Gegenstand der Erfindung ist auch eine Fahrzeugwaschanlage, in der eine Vorrichtung der oben beschriebenen Art zum Auftragen einer Behandlungslösung auf ein Fahrzeug dient.

Bei dem Verfahren zum Erzeugen einer gebrauchsfertigen Lösung aus einem Konzentrat und einem Verdünner wird einer Leitung der Verdünner zugeführt. Bei einem Zusammenfluss der Leitung wird das Konzentrat gepulst mit einer definierten Taktfrequenz mittels einer Dosierpumpe zudosiert. Die Flüssigkeitsmischung aus dem Verdünner und dem Konzentrat wird einem Mischbehälter zugeführt, der in der Leitung zwischen dem Zusammenfluss und einem Auslass für die Lösung angeordnet ist und der einen größeren Querschnitt als stromauf- und stromabwärts vom Mischbehälter liegende Teile der Leitung aufweist. Das Verfahren beinhaltet, dass das Volumen V des Mischbehälters

$$V \equiv \frac{k \cdot D}{f}$$

ist, wobei D der Durchsatz in der Leitung in einem Bereich zwischen dem Einlass für den Verdünner und dem Zusammenfluss ist, f die Taktfrequenz der Dosierpumpe ist und der Parameter k in einem Bereich zwischen 1 und 15, bevorzugt in einem Bereich von 4 bis 8, liegt. In diesem Fall ist insbesondere die Taktfrequenz der Dosierpumpe derart, dass mehrere Pumpstöße auf die Verweilzeit der Flüssigkeitsmischung im Mischbehälter entfallen. Der Innenraum des Mischbehälters weist dabei eine Längserstreckung in Durchflussrichtung und eine Quererstreckung in einer Richtung senkrecht zur Durchflussrichtung auf und das Verhältnis der maximalen Längserstreckung des Mischbehälters zur maximalen Quererstreckung des Mischbehälters liegt in einem Bereich zwischen 1 und 4 liegt.

Bei dem erfindungsgemäßen Verfahren kann sichergestellt werden, dass die Flüssigkeitsmischung aus dem Verdünner und dem Konzentrat in dem Mischbehälter ausreichend homogenisiert wird, und zwar sowohl in Querrichtung als auch in Längsrichtung, d.h. in Richtung des Durchflusses der Flüssigkeitsmischung. Es wird somit auch eine zeitliche Homogenisierung der Flüssigkeitsmischung erreicht.

Weitere Merkmale und Vorteile der Erfindung ergeben sich aus der nachfolgenden Beschreibung von Ausführungsbeispielen unter Bezugnahme auf die beigefügten Zeichnungen. Es zeigen:

Fig. 1    eine schematische Darstellung einer erfindungsgemäßen Verdünnungsvorrichtung;

Fig. 2    einen Schnitt durch einen Eingangsbereich des Mischbehälters

Fig. 3    einen Schnitt durch einen Zusammenfluss von Wasser und Konzentrat;

Fig. 4    einen Leitungsabschnitt zwischen dem Zusammenfluss und einem Mischbehälter.

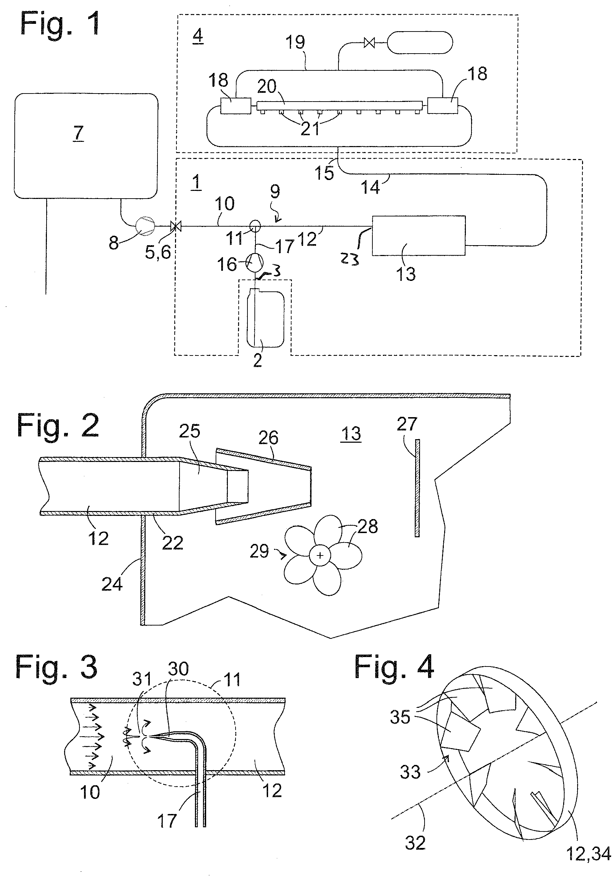

Fig. 1 ist eine schematische Darstellung einer Verdünnungsvorrichtung 1 in einer Fahrzeugwaschanlage. Die Verdünnungsvorrichtung 1 ist vorgesehen, um ein Reinigungsmittelkonzentrat aus einem Vorratsbehälter 2 mit Wasser zu verdünnen, so dass die erhaltene verdünnte Reinigungsmittellösung in einem der Verdünnungsvorrichtung 1 nachgelagerten Schaumerzeuger 4 aufgeschäumt und auf ein zu reinigendes Fahrzeug aufgetragen werden kann.

Ein Wassereinlass 5 der Verdünnungsvorrichtung 1 ist hier über ein Absperrventil 6 mit einem Wasserreservoir 7 verbunden. Das Wasserreservoir 7 kann ein Hochbehälter eines öffentlichen Versorgungsnetzes sein, der einen konstanten Wasserdruck von typischerweise ca. 4 bar am Absperrventil 6 aufrechterhält. Es kann sich aber auch um einen Druckbehälter eines Wasseraufbereitungssystems der Fahrzeugwaschanlage handeln. Wenn das Wasserreservoir 7 selber drucklos ist, kann zwischen ihm und dem Wassereinlass 5 eine Pumpe 8 vorgesehen sein, um einen zum Betrieb der Verdünnungsvorrichtung 1 und des Schaumerzeugers 4 erforderlichen Überdruck bereitzustellen.

Eine vom Wassereinlass 5 ausgehende Leitung 9 der Verdünnungsvorrichtung 1 umfasst der Reihe nach ein erstes Rohrstück 10, einen Zusammenfluss 11, ein zweites Rohrstück 12, einen Mischbehälter 13 und ein drittes Rohrstück 14, das gleichzeitig einen Auslass 15 zum Schaumerzeuger 4 bildet. Die Rohrstücke 10, 12, 14 können sämtlich den gleichen Querschnitt haben; der Querschnitt des Mischbehälters 13 ist um ein Mehrfaches größer als der der Rohrstücke 10, 12. 14. Eine Dosierpumpe 16 ist zwischen einem Konzentrateinlass 3, hier z.B. einem in den Vorratsbehälter 2 eintauchenden Schlauch, und einer Zweigleitung 17 angeordnet, die zum Zusammenfluss 11 führt. Die Dosierpumpe 16 kann eine Kolbenpumpe sein, die zwar nicht kontinuierlich fördert, dafür aber mit jedem Hub ihres Kolbens eine genau definierte Menge Konzentrat fördert. Die Taktfrequenz der Dosierpumpe 16 ist bei diesem Ausführungsbeispiel 1 Hz. Bei anderen Ausführungsbeispielen kann die Taktfrequenz der Dosierpumpe 16 jedoch in einem Bereich von 1 Hz bis 10 Hz liegen oder mehrere 10 Hz betragen.

Wenn das Absperrventil 6 offen und die Dosierpumpe 16 in Betrieb ist, vermischen sich Wasser und Konzentrats auf dem Weg vom Zusammenfluss 11 zum Auslass 15, wie später noch genauer erläutert wird. Die so erhaltene Lösung wird im Schaumerzeuger 4 zunächst in einer mit einem Granulat oder einem porösen, z. B. faserigem, Material gefüllten Kammer 18 mit einem Druckluftstrom 19 zusammengeführt. Der beim Durchtritt durch das Granulat entstehende Schaum gelangt von der Kammer 18 in ein Verteilerrohr 20, das sich quer über das (in der Fig. nicht gezeigte) Fahrzeug erstreckt und ergießt sich aus Düsen 21 des Verteilerrohrs 20 über das Fahrzeug.

Der Druck der Lösung muss beim Eintritt in den Schaumerzeuger 4 mindestens so hoch wie der des Druckluftstroms 19 sein. Um diesen Druck bereitzustellen, ist die Leitung 9 auf ihrer ganzen Länge druckdicht. Entlang der Leitung 9 nimmt der Druck vom Wassereinlass 5 zum Auslass 15 kontinuierlich ab, was zur Folge hat, dass die Dosierpumpe 16 gegen den am Zusammenfluss 11 herrschenden Wasserdruck anarbeiten muss.

Dies führt insbesondere zu Beginn des Betriebs der Verdünnungsvorrichtung zu transienten Erscheinungen. Während mit dem Öffnen des Absperrventils 6 der an dessen stromaufwärtiger Seite anstehende Wasserdruck sich nahezu augenblicklich in die Leitung 9 ausbreitet und der Fluss des Wassers durch die Leitung 9 einsetzt, muss die Dosierpumpe 16 erst gegen diesen Druck beschleunigen, um eine geeignete Förderrate des Konzentrats zu erreichen. Solange die Dosierpumpe 16 ihre Soll-Förderrate noch nicht erreicht hat, wird also nicht genug Konzentrat gefördert, um eine gewünschte Konzentration der Lösung zu erzielen. Indem jedoch diese zu dünne Lösung mit hoher Geschwindigkeit in den Mischbehälter 13 einströmt, vermischt sie sich dort mit Lösung, die noch von einer früheren Anwendung darin zurückgeblieben ist und die korrekte Konzentration aufweist, so dass die Abweichung der Konzentration vom Sollwert bei der Lösung, die den Mischbehälter 13 verlässt, erheblich kleiner ist als bei der hineinströmenden.

Das Volumen des Mischbehälters 13 ist auf die Durchflussrate des Wassers abgestimmt, die sich bei Anliegen eines Nennbetriebsdrucks am Wassereinlass 5 einstellt. Wenn die Verdünnungsvorrichtung mit Leitungswasser gespeist wird, sollte dieser Nenndruck der übliche Leitungsdruck der öffentlichen Wasserversorgung von ca. 4 bar sein. Das Volumen des Mischbehälters 13 beträgt 5-12%, insbesondere 5-10%, der Wassermenge, die unter Nenndruck pro Minute durch die Leitung 2 fließt. Mit anderen Worten würde das Wasser im Mischbehälter 13, wenn keine Durchmischung stattfände, in einer Zeitspanne von 3-6 s komplett ausgetauscht. Die Zeit, die die Dosierpumpe 16 zum Erreichen der stationären Förderrate benötigt, sollte nicht länger als die Austauschzeitspanne sein.

Im vorliegenden Ausführungsbeispiel ist der Mischbehälter kreiszylindrisch. Die Länge beträgt 30 cm, der Durchmesser 11,4 cm, bei der stromaufwärtigen Stirnseite weist der Mischbehälter eine Zulauföffnung mit einem Durchmesser von 15 mm auf. Das Verhältnis der Länge des Mischbehälters 13 zu seiner maximalen Erstreckung in Querrichtung, d.h. einer Richtung senkrecht zur Achse des zylindrischen Mischbehälters 13, ist damit 2,6. Bei anderen Ausführungsbeispielen liegt dieses Verhältnis in einem Bereich von 0,5 bis 5.

Auf der stromabwärtigen Seite weist die Stirnfläche des Mischbehälters 13 eine Ablauföffnung mit demselben Durchmesser auf. Die Zulauföffnung und die Ablauföffnung sind jedoch nicht zentral symmetrisch zur Achse des zylindrischen Mischbehälters 13 angeordnet, sondern beabstandet zur Achse und zwar versetzt zueinander. Im vorliegenden Ausführungsbeispiel ist die Zulauföffnung bezüglich der Achse des Mischbehälters 13 gegenüberliegend zu der Ablauföffnung angeordnet. Beim Betrieb der Vorrichtung und beim Durchführen des Verfahrens ergibt sich in der Leitung 9 ein Durchsatz, d. h. ein Wasservolumenstrom, von 30 l/min beim Zusammenfluss 11. Für das Volumen des Mischbehälters 13 gilt

$$V = \frac{k \cdot D}{f},$$

wobei V das Volumen des Mischbehälters 13 ist, D der Durchsatz in der Leitung 9 zwischen dem Einlass 5 für den Verdünner und dem Zusammenfluss 11 ist, insbesondere unmittelbar vor dem Zusammenfluss 11, und f die Taktfrequenz der Dosierpumpe 16 ist. Der Parameter k gibt an, wie viele Pumpstöße in dem Mischbehälter 13 gemischt werden. Der Parameter k liegt in einem Bereich zwischen 1 und 15, insbesondere in einem Bereich von 4 bis 8. Bei dem vorliegenden Ausführungsbeispiel ist der Wert des Parameters k bei einer Taktfrequenz vor Dosierpumpe von 1 Hz gleich 6, so dass der Mischbehälter 13 sechs Pumpstöße beim Zudosieren des Konzentrats fasst.

Um eine turbulente Durchmischung von zuströmender und vorhandener Lösung im Mischbehälter 13 zu erreichen, kann es bereits genügen, wenn der Querschnitt der Leitung 9 sich beim Übergang vom Rohrstück 12 zum Mischbehälter 13 abrupt ändert. Als Maßnahmen zum Steigern der Mischeffektivität kommen unter anderem in Betracht:

ein Stutzen 22, der am Eingang des Mischbehälters 13 in Verlängerung des Rohrstücks 12 über eine Stirnwand 24 des Mischbehälters 13 hinaus in dessen Inneres vorspringt,
eine Düse 25, die am Ende des Rohrstücks 12 dessen Querschnitt verengt und so eine Beschleunigung der Lösung beim Eintritt in den Mischbehälter erzwingt,
eine Strahlpumpe 26, die von der eintretenden Lösung durchströmt wird und dabei bereits im Mischbehälter 13 vorhandene Lösung ansaugt,
eine Prallfläche 27, die am Eingang 23 des Mischbehälters angeordnet ist, um den Strom der eintretenden Lösung zu zerstreuen und/oder
ein Rührflügel 28 im Mischbehälter 13, hier in Form eines drehangetriebenen Flügelrades 29.

Auch nachdem die Dosierpumpe 16 ihre stationäre Förderrate erreicht hat, kann eine hohe Viskosität des Konzentrats eine gleichmäßige Vermischung von Konzentrat und Wasser behindern. Um dem entgegenzuwirken, kann am Zusammenfluss 11, wie in Fig. 3 in einem Schnitt gezeigt, die Zweigleitung über eine Düse 30 in die Leitung 9 einmünden, die entgegengesetzt zur Flussrichtung des Wassers orientiert ist. Die hohe Geschwindigkeitsdifferenz zwischen dem Wasser und einem aus der Düse 30 austretenden Konzentratstrahl 31 führt auch hier zu Turbulenz, so dass sich das Konzentrat über einen großen Teil des Querschnitts des Rohrstücks 12 verteilt und bereits vor Erreichen des Mischbehälters stark verdünnt ist.

Als weitere Maßnahme zum Fördern der Vermischung von Konzentrat und Wasser bereits im Rohrstück 12 kann in einem Teil des Rohrstücks 12 ein in Fig. 4 gezeigter, eine Drehung des Flüssigkeitsstroms um die Längsachse 32 des Rohrstücks 12 anregender Drallerzeuger 33, hier in Form von schräg zur Längsachse 32 ausgerichteten, von einer Außenwand 34 des Rohrstücks 12 zur Längsachse 32 vorspringenden Schaufelblättern 35 vorgesehen sein. Stromabwärts vom Drallerzeuger 33 kann ferner ein (nicht dargestelltes) Turbinenrad mit entgegengesetzt zu den Schaufelblättern 35 geneigten Schaufelblättern vorgesehen sein, das von der Strömung im Rohrstück 12 in Drehung versetzt, seinerseits das Flügelrad 29 antreibt.

**Bezugszeichenliste**

1    Verdünnungsvorrichtung
2    Vorratsbehälter
3    Konzentrateinlass

| | |
|---|---|
| 4 | Schaumerzeuger |
| 5 | Wassereinlass |
| 6 | Absperrventil |
| 7 | Wasserreservoir |
| 8 | Pumpe |
| 9 | Leitung |
| 10 | Rohrstück |
| 11 | Zusammenfluss |
| 12 | Rohrstück |
| 13 | Mischbehälter |
| 14 | Rohrstück |
| 15 | Auslass |
| 16 | Dosierpumpe |
| 17 | Zweigleitung |
| 18 | Kammer |
| 19 | Druckluftstrom |
| 20 | Verteilerrohr |
| 21 | Düse |
| 22 | Stutzen |
| 23 | Eingang |
| 24 | Stirnwand |
| 25 | Düse |
| 26 | Strahlpumpe |
| 27 | Prallfläche |
| 28 | Rührflügel |
| 29 | Flügelrad |
| 30 | Düse |
| 31 | Konzentratstrahl |
| 32 | Längsachse |
| 33 | Drallerzeuger |
| 34 | Außenwand |
| 35 | Schaufelblatt |

**Patentansprüche**

1. Vorrichtung zum Erzeugen einer gebrauchsfertigen Lösung aus einem Konzentrat und einem Verdünner, mit

   - einem Einlass (5) für den Verdünner,
   - einem Einlass (3) für das Konzentrat,
   - einem Auslass (15) für die Lösung,
   - einer Leitung (9), die sich vom Einlass (5) für den Verdünner über einen Zusammenfluss (11), an dem Verdünner und Konzentrat aufeinandertreffen, zum Auslass (15) erstreckt,
   - einem Mischbehälter (13), der in der Leitung (9) zwischen dem Zusammenfluss (11) und dem Auslass (15) angeordnet ist und einen größeren Querschnitt als stromauf- und stromabwärts vom Mischbehälter (13) liegende Teile (12, 14) der Leitung (9) aufweist, und
   - einer Dosierpumpe (16) für das Konzentrat, die saugseitig mit dem Einlass (3) für das Konzentrat und druckseitig mit dem Zusammenfluss (11) verbunden ist, die gepulst arbeitet und ausgebildet ist, mit einer Taktfrequenz zu arbeiten, bei der mehrere Pumpstöße auf die Verweilzeit der Flüssigkeit im Mischbehälter (13) entfallen,
   - wobei der Innenraum des Mischbehälters (13) eine Längserstreckung in Durchflussrichtung und eine Quererstreckung in einer Richtung senkrecht zur Durchflussrichtung aufweist,

**dadurch gekennzeichnet, dass** das Verhältnis der maximalen Längserstreckung des Mischbehälters (13) zur maximalen Quererstreckung des Mischbehälters (13) in einem Bereich zwischen 1 und 4 liegt.

2. Vorrichtung nach Anspruch 1, **dadurch gekennzeichnet, dass** die Leitung (9) druckdicht ausgebildet ist.

3. Vorrichtung nach Anspruch 1 oder 2, **dadurch gekennzeichnet, dass** bei einem empfohlenen Nenndruck am Einlass (5) für den Verdünner der Durchsatz der Leitung (9) pro Minute ein Mehrfaches des Volumens des Mischbehälters (13) ist.

4. Vorrichtung nach Anspruch 3, **dadurch gekennzeichnet, dass** der Durchsatz der Leitung (9) pro Minute zwischen dem 10- und 20-fachen des Volumens des Mischbehälters (13) liegt.

5. Vorrichtung nach einem der vorhergehenden Ansprüche, **dadurch gekennzeichnet, dass** die Taktfrequenz der Dosierpumpe (16) in einem Bereich von 1 Hz bis 10 Hz liegt.

6. Vorrichtung nach einem der vorhergehenden Ansprüche, **dadurch gekennzeichnet, dass** der Einlass (5) für den Verdünner so ausgebildet ist, dass sich ein definierter Durchsatz D in der Leitung (9) in einem Bereich zwischen dem Einlass (5) für den Verdünner und dem Zusammenfluss (11) ergibt, dass der Dosierpumpe (16) die Taktfrequenz f zugeordnet ist, und dass das Volumen V des Mischbehälters (13)

$$V = \frac{k \cdot D}{f}$$

ist, wobei der Parameter k in einem Bereich zwischen 1 und 15 liegt.

7. Vorrichtung nach Anspruch 6, **dadurch gekennzeichnet, dass** der Parameter k in einem Bereich von 4 bis 8 liegt.

8. Vorrichtung nach einem der vorhergehenden Ansprüche, **dadurch gekennzeichnet, dass** der Mischbehälter (13) zylindrisch ist und dass der Mischbehälters (13) stromaufwärts in der einen Stirnfläche eine Zulauföffnung und stromabwärts in der anderen Stirnfläche eine Ablauföffnung aufweist, wobei die Zulauföffnung und die Ablauföffnung bezüglich einer Achse des zylindrischen Mischbehälters (13) versetzt zueinander angeordnet sind.

9. Vorrichtung nach Anspruch 8, **dadurch gekennzeichnet, dass** das Verhältnis der Fläche der Zulauföffnung zur mittleren Querschnittsfläche des Mischbehälters (13) in einem Bereich von 1/30 bis 1/200 liegt.

10. Vorrichtung nach einem der vorhergehenden Ansprüche, **dadurch gekennzeichnet, dass** ein Absperrventil (6) zwischen dem Einlass (5) für den Verdünner und dem Zusammenfluss (11) vorgesehen ist.

11. Vorrichtung nach einem der vorhergehenden Ansprüche, **dadurch gekennzeichnet, dass** ein Konzentrat-Vorratsbehälter (2) auswechselbar an den Einlass (3) für das Konzentrat angeschlossen ist.

12. Vorrichtung nach einem der vorhergehenden Ansprüche, **dadurch gekennzeichnet, dass** dem Mischbehälter (13) ein Schaumerzeuger (4) nachgelagert ist.

13. Fahrzeugwaschanlage, **gekennzeichnet durch** eine Vorrichtung nach einem der vorhergehenden Ansprüche.

14. Verfahren zum Erzeugen einer gebrauchsfertigen Lösung aus einem Konzentrat und einem Verdünner, bei dem

- einer Leitung (9) der Verdünner zugeführt wird,
- bei einem Zusammenfluss (11) der Leitung (9) das Konzentrat gepulst mit einer definierten Taktfrequenz mittels einer Dosierpumpe (16) zudosiert wird und
- die Flüssigkeitsmischung aus dem Verdünner und dem Konzentrat einem Mischbehälter (13) zugeführt wird, der in der Leitung (9) zwischen dem Zusammenfluss (11) und einem Auslass (15) für die Lösung angeordnet ist und der einen größeren Querschnitt als stromauf- und stromabwärts vom Mischbehälter (13) liegende Teile (12,14) der Leitung (9) aufweist,
- das Volumen V des Mischbehälters (13)

$$V \equiv \frac{k \cdot D}{f}$$

ist, wobei D der Durchsatz in der Leitung (9) in einem Bereich zwischen dem Einlass (5) für den Verdünner und dem Zusammenfluss (11) ist, f die Taktfrequenz der Dosierpumpe (16) ist und der Parameter k in einem Bereich zwischen 1 und 15 liegt und
- der Innenraum des Mischbehälters (13) eine Längserstreckung in Durchflussrichtung und eine Quererstreckung in einer Richtung senkrecht zur Durchflussrichtung aufweist,

**dadurch gekennzeichnet, dass** das Verhältnis der maximalen Längserstreckung des Mischbehälters (13) zur maximalen Quererstreckung des Mischbehälters (13) in einem Bereich zwischen 1 und 4 liegt.

15. Verfahren nach Anspruch 14, **dadurch gekennzeichnet, dass** der Parameter k in einem Bereich von 4 bis 8 liegt.

**Claims**

1. Device for producing a ready-to-use solution from a concentrate and a diluent, comprising

- an inlet (5) for the diluent,
- an inlet (3) for the concentrate,
- an outlet (15) for the solution,
- a line (9) which extends from the inlet (5) for the diluent to the outlet (15) via a confluence (11), at which the diluent and the concentrate converge,
- a mixing container (13) which is disposed in the line (9) between the confluence (11) and the outlet (15) and which has a larger cross-section than parts (12, 14) of the line (9) which are located upstream and downstream of the mixing container (13), and
- a metering pump (16) for the concentrate, which is connected on the suction side to the inlet (3) for the concentrate and on the pressure side to the confluence (11), which operates in pulsed mode and which is designed to operate at a clock frequency in which a plurality of pump surges are attributable to the dwell time of the liquid in the mixing container (13),

wherein

- the interior space of the mixing container (13) has a longitudinal dimension in the direction of flow and a transverse dimension in a direction at right angles relative to the direction of flow, **characterized in that** the ratio of the maximum longitudinal dimension of the mixing container (13) to the maximum transverse dimension of the mixing container (13) is in a range of 1 to 4.

2. Device according to claim 1, **characterized in that** the line (9) is designed so as to be pressure-proof.

3. Device according to claim 1 or 2, **characterized in**

**that** at a recommended nominal pressure at the inlet (5) for the diluent, the throughput through the line (9) per minute is a multiple of the volume of the mixing container (13).

4. Device according to claim 3, **characterized in that** the throughput through the line (9) per minute is in a range between 10 and 20 times the volume of the mixing container (13).

5. Device according to one of the preceding claims, **characterized in that** the clock frequency of the metering pump (16) is in the range of 1 Hz to 10 Hz.

6. Device according to one of the preceding claims, **characterized in that** the inlet (5) for the diluent is designed in such a manner that in a section between the inlet (5) for the diluent and the confluence (11), a defined throughput $D$ through the line (9) is ensured, that the clock frequency $f$ is assigned to the metering pump (16), and that the volume $V$ of the mixing container (13) is

$$V = \frac{k \cdot D}{f}$$

where the parameter $k$ is in a range of 1 to 15.

7. Device according to claim 6, **characterized in that** the parameter $k$ is in a range of 4 to 8.

8. Device according to one of the preceding claims, **characterized in that** the mixing container (13) has a cylindrical shape and that in the upstream direction, the mixing container (13) has an inlet opening in one end surface, and in the downstream direction, it has an outlet opening in the other end surface, with the inlet opening and the outlet opening, relative to an axis of the cylindrical mixing container (13), being offset with respect to one another.

9. Device according to claim 8, **characterized in that** the ratio of the surface area of the inlet opening to the mean cross-sectional area of the mixing container (13) is in a range of 1/30 to 1/200.

10. Device according to one of the preceding claims, **characterized in that** a shut-off valve (6) is disposed between the inlet (5) for the diluent and the confluence (11).

11. Device according to one of the preceding claims, **characterized in that** a storage tank (2) for the concentrate is replaceably connected to the inlet (3) for the concentrate.

12. Device according to one of the preceding claims, **characterized in that** a foam generator (4) is disposed downstream of the mixing container (13).

13. Vehicle wash facility, **characterized by** a device according to one of the preceding claims.

14. Method for producing a ready-to-use solution from a concentrate and a diluent, in which

   - the diluent is fed into a line (9),
   - at a confluence (11) of the line (9), the concentrate is metered in by means of a metering pump (16) in pulsed mode at a defined clock frequency, and
   - the liquid mixture of the diluent and the concentrate is fed to a mixing container (13) which is disposed in the line (9) between the confluence (11) and an outlet (15) for the solution and which has a larger cross-section than parts (12,14) of the line (9) located upstream and downstream of the mixing container (13),
   - the volume $V$ of the mixing container (13) is

$$V = \frac{k \cdot D}{f}$$

   where D stands for the throughput through the line (9) in a section from the inlet (5) for the diluent and the confluence (11), $f$ stands for the clock frequency of the metering pump (16), and the parameter k is in a range of 1 to 15 and
   - the interior space of the mixing container (13) has a longitudinal dimension in the direction of flow and a transverse dimension at direction at right angles relative to the direction of flow,

   **characterized in that**

   - the ratio of the maximum longitudinal dimension of the mixing container (13) to the maximum transverse dimension of the mixing container (13) is in a range of 1 to 4.

15. Method according to claim 14, **characterized in that** the parameter k is in a range of 4 to 8.

**Revendications**

1. Dispositif de production d'une solution prête à l'emploi constituée d'un concentré et d'un diluant, comprenant

   - une entrée (5) pour le diluant,
   - une entrée (3) pour le concentré,
   - une sortie (15) pour la solution,
   - une conduite (9) qui s'étend depuis l'entrée (5) pour le diluant par le biais d'une jonction (11) au niveau de laquelle le diluant et le concentré sont réunis, jusqu'à la sortie (15),

- un récipient de mélange (13) qui est disposé dans la conduite (9) entre la jonction (11) et la sortie (15) et qui présente une plus grande section transversale que des parties (12, 14) de la conduite (9) situées en amont et en aval du récipient de mélange (13), et

- une pompe de dosage (16) pour le concentré, qui est connectée du côté aspiration à l'entrée (3) pour le concentré et du côté pression à la jonction (11), qui fonctionne de manière pulsée et qui est réalisée de manière à fonctionner avec une fréquence d'impulsions à laquelle plusieurs giclées de la pompe découlent du temps de séjour du liquide dans le réservoir de mélange (13),

- l'espace interne du réservoir de mélange (13) présentant une étendue longitudinale dans la direction d'écoulement et une étendue transversale dans une direction perpendiculaire à la direction d'écoulement,

**caractérisé en ce que** le rapport de l'étendue longitudinale maximale du réservoir de mélange (13) à l'étendue transversale maximale du réservoir de mélange (13) est situé dans une plage comprise entre 1 et 4.

2. Dispositif selon la revendication 1, **caractérisé en ce que** la conduite (9) est réalisé de manière étanche à la pression.

3. Dispositif selon la revendication 1 ou 2, **caractérisé en ce que** dans le cas d'une pression nominale recommandée à l'entrée (5) pour le diluant, le débit de la conduite (9) par minute est un multiple du volume du réservoir de mélange (13).

4. Dispositif selon la revendication 3, **caractérisé en ce que** le débit de la conduite (9) par minute est compris entre 10 et 20 fois le volume du réservoir de mélange (13).

5. Dispositif selon l'une quelconque des revendications précédentes, **caractérisé en ce que** la fréquence d'impulsions de la pompe de dosage (16) est située dans une plage de 1 Hz à 10 Hz.

6. Dispositif selon l'une quelconque des revendications précédentes, **caractérisé en ce que** l'entrée (5) pour le diluant est réalisée de telle sorte qu'un débit défini D dans la conduite (9) soit obtenu dans une région entre l'entrée (5) pour le diluant et la jonction (11), **en ce que** la fréquence d'impulsions f est associée à la pompe de dosage (16) et **en ce que** le volume V du réservoir de mélange (13) vaut

$$V = \frac{k \cdot D}{f}$$

le paramètre k étant situé dans une plage comprise entre 1 et 15.

7. Dispositif selon la revendication 6, **caractérisé en ce que** le paramètre k est situé dans une plage comprise entre 4 et 8.

8. Dispositif selon l'une quelconque des revendications précédentes, **caractérisé en ce que** le récipient de mélange (13) est cylindrique et **en ce que** le récipient de mélange (13) présente en amont dans l'une des surfaces frontales une ouverture d'alimentation, et en aval dans l'autre surface frontale une ouverture d'évacuation, l'ouverture d'alimentation et l'ouverture d'évacuation étant disposées de manière décalée l'une par rapport à l'autre par rapport à un axe du récipient de mélange cylindrique (13).

9. Dispositif selon la revendication 8, **caractérisé en ce que** le rapport de la surface de l'ouverture d'alimentation à la surface en section transversale moyenne du récipient de mélange (13) est situé dans une plage comprise entre 1/30 et 1/200.

10. Dispositif selon l'une quelconque des revendications précédentes, **caractérisé en ce qu'**une soupape d'arrêt (6) est prévue entre l'entrée (5) pour le diluant et la jonction (11).

11. Dispositif selon l'une quelconque des revendications précédentes, **caractérisé en ce qu'**un réservoir de concentré (2) est raccordé de manière remplaçable à l'entrée (3) pour le concentré.

12. Dispositif selon l'une quelconque des revendications précédentes, **caractérisé en ce qu'**un générateur de mousse (4) est situé en aval du récipient de mélange (13).

13. Installation de lavage de véhicule, **caractérisée par** un dispositif selon l'une quelconque des revendications précédentes.

14. Procédé de production d'une solution prête à l'emploi constituée d'un concentré et d'un diluant, dans lequel

- le diluant est acheminé à une conduite (9)
- le concentré, au niveau d'une jonction (11) de la conduite (9), est ajouté par dosage de manière pulsée au moyen d'une pompe de dosage (16) avec une fréquence d'impulsions définie et
- le mélange de liquide constitué du diluant et du concentré est acheminé à un récipient de mélange (13) qui est disposé dans la conduite (9) entre la jonction (11) et une sortie (15) pour la solution, et qui présente une plus grande section transversale que des parties (12, 14) de la conduite (9) situées en amont et en aval du récipient de mélange (13),
- le volume V du récipient de mélange (13) vaut

$$V = \frac{k \cdot D}{f},$$

D étant le débit dans la conduite (9) dans une région entre l'entrée (5) pour le diluant et la jonction (11), f étant la fréquence d'impulsions de la pompe de dosage (16) et le paramètre k étant situé dans une plage comprise entre 1 et 15 et
- l'espace interne du récipient de mélange (13) présente une étendue longitudinale dans la direction d'écoulement et une étendue transversale dans une direction perpendiculaire à la direction d'écoulement,

**caractérisé en ce que** le rapport de l'étendue longitudinale maximale du réservoir de mélange (13) à l'étendue transversale maximale du réservoir de mélange (13) est situé dans une plage comprise entre 1 et 4.

15. Procédé selon la revendication 14, **caractérisé en ce que** le paramètre k est situé dans une plage comprise entre 4 et 8.

# Fig. 1

# Fig. 2

# Fig. 3

# Fig. 4

**EP 3 405 280 B1**

**IN DER BESCHREIBUNG AUFGEFÜHRTE DOKUMENTE**

**In der Beschreibung aufgeführte Patentdokumente**

- US 20040065682 A1
- US 6293290 B1
- US 4648043 A
- US 4533132 A